**Europäisches Patentamt**

**European Patent Office**

**Office européen des brevets**

(19)

(11) Veröffentlichungsnummer : **0 340 634 B1**

(12) ## EUROPÄISCHE PATENTSCHRIFT

(45) Veröffentlichungstag der Patentschrift :
10.07.91 Patentblatt 91/28

(51) Int. Cl.$^5$ : **B60T 8/32**

(21) Anmeldenummer : 89107636.6

(22) Anmeldetag : 27.04.89

(54) Verfahren zum Regeln des Bremsdruckes in einer blockiergeschützten Fahrzeug-Bremsanlage.

(30) Priorität : 03.05.88 DE 3815021

(43) Veröffentlichungstag der Anmeldung :
08.11.89 Patentblatt 89/45

(45) Bekanntmachung des Hinweises auf die
Patenterteilung :
10.07.91 Patentblatt 91/28

(84) Benannte Vertragsstaaten :
DE ES FR GB IT

(56) Entgegenhaltungen :
DE-A- 3 708 581

(73) Patentinhaber : LUCAS INDUSTRIES public
limited company
Great King Street
Birmingham, B19 2XF West Midlands (GB)

(72) Erfinder : Schmitt, Hubert
Mohlenweg 40
W-5405 Ochtendung (DE)
Erfinder : Braschel, Volker
Fliedergarten 57
W-5450 Neuwied (DE)

(74) Vertreter : von Hellfeld, Axel, Dr. Dipl.-Phys., et
al
WUESTHOFF & WUESTHOFF
Schweigerstrasse 2
W-8000 München 90 (DE)

EP 0 340 634 B1

## Beschreibung

Die Erfindung betrifft ein Verfahren zum Regeln des Bremsdruckes in einer blockiergeschützten Fahrzeugbremsanlage, bei dem das Drehverhalten eines gebremsten Rades gemessen und in Abhängigkeit von seinem Schlupf und/oder seiner Verzögerung bei Überschreiten von Schwellwerten der Bremsdruck an dem Rad abgebaut wird.

Derartige Verfahren sind heute allgemein als ABS-Regelung bekannt (siehe BOSCH TECHNISCHE BERICHTE, Bd. 7, 1980, Heft 2, S. 84, entsprechend Bosch Technological Reports, English special edition, February 1982, ISSN 0006-798 X).

Wie in der ABS-Regeltechnik bekannt ist, erfolgt die Regelung mit Hilfe einer sogenannten Fahrzeug-Referenzgeschwindigkeit, da die tatsächliche Fahrzeuggeschwindigkeit über Grund nicht direkt meßbar ist. Die Fahrzeug-Referenzgeschwindigkeit tritt also an Stelle der nicht direkt meßbaren Fahrzeuggeschwindigkeit. Die Fahrzeug-Referenzgeschwindigkeit $V_{ref}$ wird mit bekannten Verfahren aus den Radgeschwindigkeiten der Räder des Fahrzeuges ermittelt.

Die ABS-Regelung sieht vor, daß während einer Bremsung an einem gebremsten Rad dann ein Abbau des Bremsdruckes erfolgt, wenn die Radgeschwindigkeit (Umfangsgeschwindigkeit oder entsprechend die Winkelgeschwindigkeit) des gebremsten Rades stark von der Fahrzeug-Referenzgeschwindigkeit abweicht, d.h. sich von der Fahrzeug-Referenzgeschwindigkeit um mehr als einen vorgegebenen Schwellwert unterscheidet, und/oder wenn die Drehverzögerung des gebremsten Rades größer ist als ein anderer vorgegebener Schwellwert, welcher mit der maximal physikalisch möglichen Fahrzeugverzögerung zusammenhängt.

Werden während eine Bremsung alle Räder des Fahrzeuges gleichzeitig instabil, d.h. erfahren alle Räder eine Verzögerung, die deutlich über der physikalisch maximal möglichen Fahrzeugverzögerung liegt (z.B. ist die Verzögerung größer als –1,5 g), so wird eine Fahrzeug-Referenzgeschwindigkeit gebildet, die der maximal physikalisch möglichen Fahrzeugverzögerung entspricht (z.B. –1,1 g), d.h. die Referenzgeschwindigkeit wird nicht mehr von der gemessenen Radgeschwindigkeit "gestützt". Der Begriff "nicht gestützt" bedeutet in diesem Zusammenhang, daß unter den gegebenen Voraussetzungen die gemessenen Radgeschwindigkeiten nicht mehr für die Bildung der Referenzgeschwindigkeit herangezogen werden. In diesem Falle wird dann an einem gebremsten Rad der Bremsdruck abgebaut, wenn sich die Umfangsgeschwindigkeit des Rades in deutlichem Schlupf (von z.B. mindestens 50 %) gegenüber der so bestimmten Fahrzeug-Referenzgeschwindigkeit befindet und entweder überhaupt keine Radverzögerungssignale gemessen werden (das Rad also stillsteht) oder sich seine Drehverzögerung unterhalb einem gegebenem Schwellwert befindet.

Die vorstehenden Grundlagen der ABS-Regelungstechnik vorausgesetzt, befaßt sich nun die Erfindung mit einem Problem, das bei herkömmlichen ABS-Regelanlagen dann auftreten kann, wenn das Fahrzeug aus dem Stillstand an einem Hang bergauf angefahren wird und dabei zumindest eines der Räder durchdreht. Dieses Problem ergibt sich wie folgt.

Bei der vorstehend geschilderten Anfahr-Situation an einem Hang liefern in der Regel alle das Drehverhalten der Räder messenden Sensoren Rad-Drehungen anzeigende Signale. Es wird deshalb vom Rechner die oben erläuterte Fahrzeug-Referenzgeschwindigkeit $V_{ref}$ errechnet, und zwar auch dann, wenn an den Rädern Beschleunigungswerte gemessen werden, die über der maximal möglichen Fahrzeugbeschleunigung liegen, da ein Fahrzeug auch mit durchdrehenden Rädern eine Beschleunigung erfahren kann. Es versteht sich, daß unter der "maximal möglichen Fahrzeugbeschleunigung" diejenige zu verstehen ist, die bei optimalen Straßen- und Reifenverhältnissen mit dem gegebenen Fahrzeug erzielbar ist. Entsprechendes gilt für die "maximal physikalisch mögliche Fahrzeugverzögerung". Auch wenn die Räder in der geschilderten Anfahrsituation am Hang nur unter der physikalisch maximal möglichen Fahrzeugbeschleunigung durchdrehen, wird vom ABS-Rechner eine Referenzgeschwindigkeit errechnet, die dann allerdings schneller ansteigt als im vorstehend erwähnten Fall eines extrem starken Durchdrehens, da für den Rechner kein Durchdrehen erkennbar ist.

Falls in einer solchen Situation die Antriebskraft der Räder von der hangabwärts gerichteten Schwerkraft des Fahrzeuges kompensiert wird, kann das Fahrzeug stillstehen oder sogar mit durchdrehenden Rädern hangabwärts rutschen. Die vom Rechner erzeugte Fahrzeug-Referenzgeschwindigkeit nimmt Werte an, die keinen Bezug mehr zur tatsächlichen Fahrzeuggeschwindigkeit haben.

Der Fahrer wird in einer solchen Situation vom Gaspedal auf die Bremse umsteigen. Es werden dann alle Räder den Wert der tatsächlichen Fahrzeuggeschwindigkeit annehmen, in diesem Falle also die Geschwindigkeit Null.

Der Rechner der ABS-Anlage registriert diesen Zustand aber als Blockierzustand der Räder, so daß Druckabbausignale erzeugt werden bis die Fahrzeug-Referenzgeschwindigkeit ebenfalls den Wert Null erreicht. Bei bekannten ABS-Regelungssystemen bedeutet dies beispielsweise bei einer Ausgangs-Referenzgeschwindigkeit von 40 km/h und einer vorgegebenen maximalen Verzögerung von –1,1 g eine Zeitspanne von etwa einer Sekunde, während der kein Bremsdruck am Rad herrscht, obwohl der Fahrer auf die Bremse tritt. Das Fahrzeug kann für eine Sekunde oder sogar länger rückwärts rollen.

Der Erfindung liegt die Aufgabe zugrunde, ein ABS-Regelverfahren zu schaffen, bei dem die vorstehend erläuterte Gefahr eines unerwünschten Druckabbaus nicht besteht.

Erfindunggemäß wird diese Aufgabe dadurch gelöst, daß bei einem Anfahren nach einen Stillstand des Fahrzeuges der Schlupf eines Rades dann für eine vorgegebene Zeitspanne bei der regelung des Bremsdruckes dieses rades unberücksichtigt bleibt, wenn seine Drehbeschleunigung größer ist als ein vorgegebener Wert.

Alternativ kann die Aufgabe auch dadurch gelöst werden, daß bei einen Anfahren nach einem Stillstand des Fahrzeuges der Schlupf des gebremsten rades dann für eine vorgegebene Zeitspanne bei der Regelung des Bremsdruckes dieses Rades unberücksichtigt bleibt, wenn seine Drehgeschwindigkeit größer ist als ein vorgegebener Wert.

Die beiden vorstehend genannten alternativen Lösungen können auch zusammengefaßt werden, d.h. nach einem Stillstand des Fahrzeuges wird der Schlupf eines gebremsten Rades dann für eine vorgegebene Zeitspanne bei der Regelung des Bremsdruckes dieses Rades unberücksichtigt gelassen, wenn die Drehbeschleunigung und die Drehgeschwindigkeit dieses Rades größer sind als jeweils ein vorgegebener Wert.

Die Erfindung wird realisiert mit Fahrzeugen, bei denen die angetriebenen Räder mit ABS-Sensoren für die Drehgeschwindigkeit bzw. -beschleunigung ausgerüstet sind.

Gemäß der Erfindung wird also festgestellt und im ABS-Rechner jeweils registriert, wann das Fahrzeug aus einem Stillstand anfährt. Für die Festellung des Fahrzeug-Stillstandes stehen unterschiedliche Mittel zur Verfügung, zum Beispiel kann registriert werden, ob für eine bestimmte, relativ lange Zeitspanne überhaupt keine Drehsignale bezüglich der Räder gemessen worden sind.

Aus der DE-OS 23 03 660 ist es bekannt, zur Lösung von beim Durchdrehen der Räder auftretenden Problemen die Fahrzeug-Referenzgeschwindigkeit stark abzusenken. Es erfolgt eine Einstellung der Schwellenwerte. Eine Ausschaltung des Schlupfes als Regelgröße für eine vorgegebene Zeitspanne ist dort nicht vorgesehen.

Nach einem Stillstand des Fahrzeuges wird erfindungsgemäß der Schlupf für eine begrenzte Zeitspanne aus der Regelung ausgenommen, d.h. das Über- oder Unterschreiten gewisser Schlupf-Schwellwerte spielt keine Rolle für die Regelung des Bremsdruckes. Dieses unwirksam machen des Schlupfes als Regelgröße ist jeweils auf ein einzelnes angetriebenes Rad des Fahrzeuges abgestellt, d.h. es wird für jedes einzelne Rad nach einem Stillstand des Fahrzeuges festgestellt, ob seine Drehbeschleunigung größer ist als der vorgegebene Wert und für den Fall, daß diese Prüfung zu einem positiven Ergebnis führt, wird nur für dieses Rad sein Schlupf als Regelgröße unwirksam und es wird der Bremsdruck an der Bremse dieses Rades solange abgebaut, wie seine gemessene Drehverzögerung einen vorgegebenen Schwellwert überschreitet.

Der Druckabbau kann solange erfolgen, bis das Rad steht. In dieser Zeitspanne, die bis zu etwa 150 ms dauern kann, ist ein Zurückrollen des Fahrzeuges unerheblich.

In einer vorteilhaften Ausgestaltung der Erfindung ergibt sich der vorgegebene Wert der Drehbeschleunigung aus der physikalisch maximalen Drehbeschleunigung eines Rades, insbesondere Kann der vorgegebene Wert gleich sein der physikalisch maximalen Drehgeschwindigkeit. In einer anderen Weiterbildung der Erfindung ist die vorgegeben Zeitspanne abhängig von der maximalen Geschwindigkeitsdifferenz des Rades zwischen einem Überschreiten einer Drehbeschleunigungsschwelle und einem anschließenden Unterschreiten derselben einzustellen.

Nachfolgend wird ein Ausführungsbeispiel der Erfindung anhand de Zeichnung näher erläutert. Es zeigt :

Fig. 1     den Verlauf der Abhängigkeit der Länge der vorgegebenen Zeitspanne, in welcher der Schlupf bei einem Anfahrvorgang als Regelgröße ausfällt, von der Umfangsgeschwindigkeit des Rades ;

Fig. 2     den Verlauf der Abhängigkeit der genannten Zeitspanne von einer Geschwindigkeitsdifferenz des Rades und

Fig. 3     eine Erläuterung, wie die vorstehend genannte Geschwindigkeitsdifferenz erhalten wird.

Wie oben erläutert, wird erfindungsgemäß nach einem Fahrzeugstillstand der Schlupf eines Rades dann für eine vorgegebene Zeitspanne bei der Regelung des Bremsdruckes dieses Rades nicht berücksichtigt, wenn das Rad eine Drehbeschleunigung erreicht, die größer ist als der physikalisch maximal mögliche Wert. Der physikalisch maximal mögliche Wert ergibt sich aus dem Mindestgewicht des Fahrzeuges und der Voraussetzung optimaler Straßen- und Reifenverhältnisse und wird im ABS-Rechner vorab ein- und für allemal abgespeichert. Er kann für einen PkW z.B. 0,4 g betragen.

In der Ausgestaltung des nachfolgend beschriebenen Ausführungsbeispieles wird die Länge der Zeitspanne, in welcher der Schlupf als Regelgröße unwirksam ist, in Abhängigkeit von zwei verschiedenen Parametern eingestellt. Während dieser Zeitspanne erfolgt an einem gebremsten Rad nur dann ein Abbau des Bremsdrukkes, wenn die Drehverzögerung des Rades bestimmte Schwellwerte überschreitet.

Die beiden Parameter, gemäß denen die Zeitspanne $t_{ges}$ der Unwirksamkeit der Schlupfregelung eingestellt wird, sind

a)   die beim Anfahren erreichte Umfangsgeschwindigkeit des Rades. Dies ergibt eine Zeitspanne $t_a$, die in die Zeitspanne $t_{ges}$ eingeht, und

b)   eine weiter unten noch näher erläuterte maximale Geschwindigkeitsdifferenz, die das Rad zwischen einem Überschreiten einer Beschleunigungsschwelle und deren anschließendem Unterschreiten erfährt. Dies ergibt eine Zeitspanne $t_b$, die ebenfalls in die Gesamtzeitspanne $t_{ges}$ eingeht.

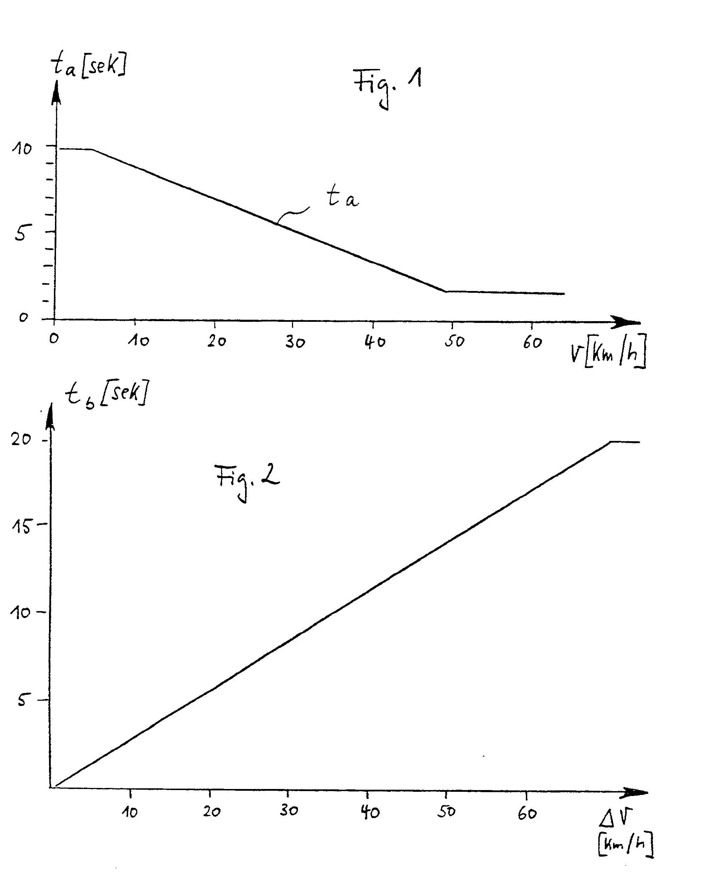

Fig. 1 zeigt die Teil-Zeitspanne $t_a$ in Abhängigkeit von der Umfangsgeschwindigkeit v des (möglicherweise) durchdrehenden Rades.

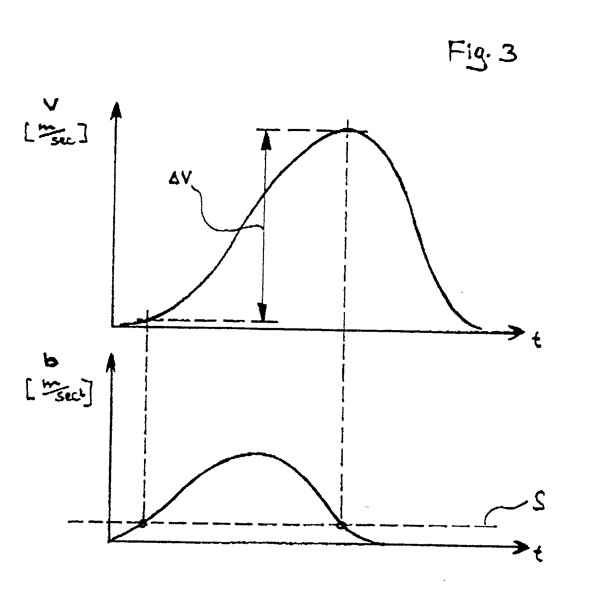

Fig. 2 zeigt die Teil-Zeitspanne $t_b$ in Abhängigkeit von einer in Fig. 3 erläuterten Geschwindigkeitsdifferenz $\Delta v$ zwischen einem Überschreiten und anschließendem Unterschreiten einer Drehbeschleunigungsschwelle S (Fig. 3). Fig. 3 zeigt im oberen Bild die Entstehung der Geschwindigkeitsdifferenz $\Delta v$ und im unteren Bild auf der gleichen Zeitskala die Drehbeschleunigung des Rades und das Überschreiten der Drehbeschleunigungsschwelle.

Die gesamte vorgegeben Zeitspanne in welcher der Schlupf für das betroffene Rad als Regelgröße unberücksichtigt bleibt, gibt sich aus der Summe $t_a + t_b$,

Mit anderen Worten, während der Zeitspanne

$$t_{ges} = t_a + t_b$$

spricht die ABS-Regelung nur auf Dreh-Verzögerungssignale der Räder an, während das Überschreiten von Schlupf-Schwellen ohne Folge bleibt. Nach Ablauf der Zeitspanne $t_{ges}$ erfolgt eine "normale" Regelung, d.h. auch der Schlupf wird in bekannter Weise für die Regelung des Bremsdruckes des betroffenen Rades herangezogen.

Die in den Fig. 1 bis 3 erläuterten und sich hieraus ergebenden Zeitintervalle $t_{ges}$ zeigen, daß bei einem langsamen Durchdrehen des Rades die Zeitspanne $t_{ges}$ aufgrund der Funktion $t_a$ relativ groß sein wird (Fig. 1).

Erreicht hingegen das Rad beim Anfahren sehr hohe Drehgeschwindigkeiten, so liefert die Funktion gemäß Fig. 1 zwar nur eine relativ kurze Teil-Zeitspanne $t_a$, jedoch besteht eine große Wahrscheinlichkeit, daß eine maximal mögliche Fahrzeug-Beschleunigungsschwelle S (Fig. 3) überschritten wird, so daß auch ein relativ großer $\Delta v$-Wert gemäß Fig. 3 auftreten kann, welcher gemäß der in Fig. 2 dargestellen Funktion zu einer relativ langen Teil-Zeitspanne $t_b$ führt, so auch in diesem Falle die Gesamt-Zeitspanne $t_{ges}$ relativ lang werden kann.

Bei einem normalen, d.h. ungestörten Anfahren mit nicht durchdrehenden Rädern, wird die Zeitspanne ohne Schlupfregelung sehr kurz sein. Wird das Fahrzeug zum Beispiel wird mit einer Beschleunigung von 0,1 g gestartet, so ergeben die in den Figuren gezeigten Diagramme bei einer Geschwindigkeit von 23 km/h eine Zeitspanne von 6,5 Sekunden. Je schneller das Fahrzeug beim Start beschleunigt wird, um so kürzer ist die Zeitspanne $t_{ges}$.

## Ansprüche

1. Verfahren zum Regeln des Bremsdruckes in einer blockiergeschützten Fahrzeugbremsanlage, bei dem das Drehverhalten eines gebremsten Rades gemessen und in Abhängigkeit von seinem Schlupf und seiner Verzögerung bei Überschreiten von Schwellenwerten der Bremsdruck an dem Rad abgebaut wird, dadurch **gekennzeichnet,** daß bei einem Anfahren nach einem Stillstand des Fahrzeuges der Schlupf eines Rades dann für eine vorgegebene Zeitspanne ($t_{ges}$) bei der Regelung des Bremsdruckes dieses Rades unberücksichtigt bleibt, wenn seine Drehbeschleunigung und/oder Drehgeschwindigkeit größer ist bzw. sind als ein vorgegebener Wert.

2. Verfahren nach Anspruch 1, dadurch **gekennzeichnet,** daß die vorgegebene Zeitspanne ($t_{ges}$) innerhalb vorgegebener Grenzwerte umso länger eingestellt wird, je kleiner die Drehgeschwindigkeit des Rades ist.

3. Verfahren nach einem der Ansprüche 1 oder 2, dadurch **gekennzeichnet,** daß die vorgegebene Zeitspanne ($t_{ges}$) umso länger eingestellt wird, je größer eine maximale Geschwin- digkeitsdifferenz ($\Delta v$) des Rades zwischen einem Überschreiten einer Drehbeschleunigungsschwelle (S) und einem anschließenden Unterschreiten derselben Schwelle ist.

4. Verfahren nach einem der vorhergehenden Ansprüche, dadurch **gekennzeichnet,**

daß der vorgegebene Wert der Drehbeschleunigung des Rades von der maximal physikalisch möglichen Beschleunigung des Fahrzeuges abhängt.

5. Verfahren nach Anspruch 4, dadurch **gekennzeichnet,**

daß der vorgesebebe Wert der Drehbeschleunigung des Rades gleich ist der maximal physikalisch möglichen Beschleunigung des Fahrzeuges.

## Claims

1. Method for controlling or regulating the brake pressure in an antilock vehicle brake system in which the rotational behaviour of a braked wheel is measured and in dependence upon the slip thereof and/or retardation thereof when threshold values are exceeded the brake pressure at the wheel is reduced,

characterized in that after a stationary state of the vehicle the slip of a wheel is disregarded for a predetermined period of time $(t_{ges})$ in the control of the brake pressure of said wheel when the angular acceleration thereof and/or angular velocity is greater than a predetermined value.

2. Method according to claim 1,

characterized in that the predetermined period of time $(t_{ges})$ is made longer within predetermined limit values the smaller the angular velocity of the wheel.

3. Method according to any one of claims 1 or 2,

characterized in that the predetermined period of time $(t_{ges})$ is set the longer the greater a maximum velocity difference $(\Delta v)$ of the wheel between exceeding an angular acceleration threshold (S) and subsequently dropping below said threshold.

4. Method according to any one of the preceding claims,

characterized in that the predetermined value of the angular acceleration of the wheel depends on the maximum physically possible acceleration of the vehicle.

5. Method according to claim 4,

characterized in that the predetermined value of the angular acceleration of the wheel is equal to the maximum physically possible acceleration of the vehicle.

## Revendications

1. Procédé de régulation de la pression de freinage dans une installation de freinage de véhicule à système antiblocage, selon lequel on mesure le comportement de rotation d'une roue freinée, et on supprime la pression de freinage sur cette roue en fonction de son glissement et de sa décélération, en cas de dépassement de voleurs de seuils,

caractérisé en ce que, lors d'un démarrage consécutif à un arrêt du véhicule, on ne tient pas compte, pendant une durée allouée $(t_{ges})$, du glissement d'une roue pour la régulation de la pression de freinage de cette roue, si son accélération de rotation et/ou sa vitesse de rotation est/sont supérieure(s) à une valeur allouée.

2. Procédé selon la revendication 1,

caractérisé en ce que la durée allouée $(t_{ges})$ est réglée, à l'intérieur de valeurs limites allouées, d'autant plus longue que la vitesse de rotation de la roue est faible.

3. Procédé selon la revendication 1 ou 2,

caractérisé en ce que la durée allouée $(t_{ges})$ est réglée d'autant plus longue qu'est grande une différence maximale de vitesses $(\Delta v)$ de la roue entre un dépassement d'un seuil d'accélération de rotation (S) et un franchissement consécutif de ce seuil par défaut.

4. Procédé selon l'une des revendications précédentes,

caractérisé en ce que la valeur allouée de l'accélération de rotation de la roue dépend de l'accélération maximale physiquement possible du véhicule.

5. Procédé selon la revendication 4,

caractérisé en ce que la valeur allouée de l'accélération de rotation de la roue est égale à l'accélération maximale physiquement possible du véhicule.

Fig. 1

Fig. 2

Fig. 3